(19) Europäisches Patentamt
European Patent Office
Office européen des brevets

(11) Publication number : **0 237 784 B1**

# (12) EUROPEAN PATENT SPECIFICATION

(45) Date of publication of patent specification : **26.06.91 Bulletin 91/26**

(51) Int. Cl.$^5$ : **B24D 3/20**, B32B 27/14, B32B 27/28

(21) Application number : **87101939.4**

(22) Date of filing : **12.02.87**

## (54) Substrate for supporting abrasive grit adhesives, method for forming same and abrasive material.

(30) Priority : **12.02.86 US 828792**

(43) Date of publication of application : **23.09.87 Bulletin 87/39**

(45) Publication of the grant of the patent : **26.06.91 Bulletin 91/26**

(84) Designated Contracting States : **DE ES FR GB IT**

(56) References cited :
**WO-A-84/00721**
**DE-B- 1 271 588**
**US-A- 3 026 241**
**US-A- 3 306 718**
**US-A- 3 615 303**

(73) Proprietor : **KIMBERLY-CLARK CORPORATION**
**401 North Lake Street**
**Neenah Wisconsin 54956 (US)**

(72) Inventor : **Cohen, Martin A.**
**4202 Vienna Way**
**Marietta Georgia 30062 (US)**
Inventor : **Kronzer, Frank J.**
**4217 North Mountain Road**
**Marietta Georgia 30066 (US)**

(74) Representative : **Diehl, Hermann Dr. et al**
**Diehl & Glaeser, Hiltl & Partner**
**Flüggenstrasse 13**
**W-8000 München 19 (DE)**

EP 0 237 784 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a substrate for supporting abrasive grit adhesives, a method for producing the same and use of such substrates.

Abrasives such as sandpaper can be formed on a number of backing sheet materials including cellulosic papers, synthetics, blends and fiber reinforced papers. In selecting and forming such backing sheets, it is often desirable to further treat the backing sheet to improve its flexibility, durability, water resistance, adhesion and barrier properties. A particularly well known and suitable means for improving these properties is to treat the backing sheet with latex or other compounds. Additional coatings of the same or other compounds may also be applied to improve the properties of the substrate and prevent penetration of the abrasive grit adhesive into the backing material. Once the backing sheet has been treated, an adhesive resin is applied to the backing followed by the application of an abrasive grit. The abrasive grit adhesive resin is then allowed to cure to yield an abrasive sheet material. Optionally, a sealing coat may be applied on top of the abrasive grit adhesive to further bond the abrasive grit to the substrate.

As exemplified by the art, numerous combinations of backing sheet material, adhesive resins, grit and other additives may be used to form abrasives for various uses. Some of the most desirous and widely used substrates for abrasive materials today are latex-treated backing sheets which are durable under both dry and wet applications. Unfortunately, such latex-treated backing sheets often contain materials which interfere with the curing of the abrasive grit adhesives or their adhesion to the underlying substrate. Many latexes are acidic or basic and therefore will neutralize their acid or base counterparts in the abrasive grit adhesives, thus inhibiting the curing of the top coat. Examples of such latexes include polyvinyl chloride, styrene-acrylic acid copolymers and styrene-vinyl pyridine copolymers. Other latexes contain functional groups such as amides, carboxylic acid, sulfonic acid or amine groups to promote adhesion or to serve as reactive sites for cross-linking. These too will interfere with the curing of adhesive top coats which contain acid or base driven curing systems.

Many latexes have antioxidants in them to prevent oxidation and aging of the latex compound. When these antioxidants come in contact with air drying varnishes such as alkyds and epoxy esters, they prevent the oxidation of the varnish and therefore inhibit curing. Finally, latexes are also known to contain soaps and other surfactants to reduce surface tension and aid dispersion. Soaps in particular are a problem because they can be either acidic or basic. For example, soaps that contain carboxylic acids or sulfonic acid groups are acidic, while soaps that contain sodium salts of carboxylic acids are basic. Either of these functional groups can interfere with the adhesive curing process. Oftentimes these surfactants migrate to the surface of the substrate and interfere with the adhesion of the adhesive top coat to the substrate. Once migrated, these surfactants can then transfer to the abrasive grit adhesive resin and interfere with curing.

Solutions to the above problems can be as simple as washing the substrate, in the case of surfactant contamination, to eliminate the undesirable material. Such action is not always desirable, however, as it may involve additional processing steps, time and money. Furthermore, simple washing will not always solve acid, base or oxidation inhibition problems. Another solution has been to design specific barriers for specific substrate/top coat combinations. Unfortunately, known barrier coats to date have only been effective with select substrate/top coat combinations. As a result, suppliers of substrates are often forced to inventory a number of backing sheet/barrier combinations to accommodate the wide variety of abrasive grit adhesives employed by the manufacturers of abrasive sheet materials.

It is, therefore, an object of the present invention to provide a substrate that will not interfere with abrasive grit adhesive top coats, including acid-inhibited, base-inhibited and oxidative curing systems. This object is solved by the substrate of claim 1. Further advantageous features of this substrate are evident from the independent claims.

The present invention provides a substrate which accomplishes the aforementioned objective through the use of a barrier coat system which provides a neutral surface for the above-mentioned curing systems thereby greatly reducing the number of substrates necessary for such abrasive grit adhesive resins.

It is a further object of the invention to provide a method for making such a substrate or laminate. This object is solved by the method of claim 10. Further advantageous features of this process are disclosed in the following dependent claims. A further object is the use of the substrate of the invention according to independent claim 19. Latex treated backing sheets and methods for their preparation are known from US-A-3026241, which reference also discloses use of same for abrasive papers. The invention provides a latex-treated backing sheet which has a layer of neutral barrier material located on its surface. The neutral layer provides a surface upon which an abrasive grit adhesive resin with an acid-inhibited, base-inhibited or oxidative curing system can adhere and cure without interference from the latex treated backing sheet or any impurities contained therein or transferred therefrom.

The invention disclose a substrate or laminate for abrasive grit adhesives and a method for producing the

same. Abrasive grit adhesives are used to bond abrasive grit to the surface of the substrate to form such materials as sandpaper. The present substrate, while being compatible with abrasive grit adhesives in general, is specifically designed for the group of adhesives which contain acid, base or oxidative curing systems. Such curing systems are inhibited by compounds that contain acidic or basic functional groups and antioxidants.

The substrates for these adhesive resin curing systems are often treated to improve the properties of the substrate. Some of the most commonly used classes of substrates are latex-treated backing sheets. Latexes greatly enhance the flexibility, durability and water resistance of the backing sheets. Unfortunately, such latex-treated backing sheets oftentimes contain the very materials which interfere with the curing of abrasive grit adhesive resins, i.e. those thermosetting resins which include acid-inhibited, base-inhibited and oxidative curing systems.

The present invention comprises a substrate for supporting such abrasive grit adhesive resins. A latex-treated backing sheet is covered with a layer of neutral barrier material which acts to separate the backing sheet and adhesive resin. The material itself is selected so as to be neutral with respect to the curing systems of the adhesive top coat. In addition, the neutral layer of material acts as a barrier to prevent the migration of any deleterious materials from the latex-treated backing sheet to the interface of the barrier coat and the adhesive where such materials could interfere with the curing or adhesion of the adhesive resin.

The method of forming the substrate involves coating a latex-treated backing sheet with a layer of neutral barrier material. A preferred method of application is through the use of extrusion coating techniques. Once the layer of neutral barrier material is applied, its surface may be subjected to a corona treatment to improve the coating and adhesion of the abrasive grit adhesive to the surface of the neutral barrier material.

Optionally, the backing sheet may be corona treated or primed and corona treated to improve the coating and adhesion of the barrier material to the latex-treated backing sheet. In addition, once the barrier coat has been added, the substrate may be heat treated prior to the corona treatment of the barrier coat. The purpose of the heat treatment is to ensure proper adhesion between the layers of the substrate. The heat treatment is done prior to the corona treatment so as not to destroy the benefits achieved from corona treating.

Further details of the invention will become evident from the following description, the drawings and the given examples.

FIG. 1 is a perspective view of an abrasive sheet material including a substrate, according to the present invention, and a top coat of abrasive grit adhesive.

FIG. 2 is a side view of the abrasive sheet material shown in FIG. 1.

FIG. 3 is a side view of the substrate, according to the present invention, shown in FIGS. 1 and 2.

FIG. 4 is a side view of an abrasive sheet material with a layer of anti-slip material attached to the underside of a substrate according to the present invention.

FIG. 5 is a perspective view of the abrasive sheet material of FIG. 1 with a layer of primer disposed within the substrate.

FIG. 6 is a side view of the abrasive sheet material of FIG. 2 with a layer of primer disposed within the substrate.

FIG. 7 is a side view of the substrate of FIG. 3 with a layer of primer disposed within the substrate.

FIG. 8 is a side view of the abrasive sheet material of FIG. 4 with a layer of primer disposed within the substrate.

The present invention relates to a substrate or laminate for supporting an abrasive grit adhesive top coat as is commonly used in the formation of abrasive materials such as wet sandpaper or dry sandpaper. Due to the neutral surface and barrier properties of the present substrate, it is particularly useful in conjunction with the group of abrasive grit adhesives which contain acid-inhibited, base-inhibited or oxidative curing systems. However, it is important to note that the present invention should not be restricted to such adhesive curing systems as its design will also work with abrasive grit adhesives in general.

Referring to FIGS. 1 through 3, there is shown such a substrate 10, according to the present invention, which is adapted for use with a top coat of abrasive grit adhesive 12 including a curing system which is inhibited by acids, bases, antioxidants, surfactants and the like. Referring to FIGS. 2 and 3, the substrate 10 is comprised of a latex-treated backing sheet 14 and a layer of neutral barrier material 16 disposed between and in contact with the backing sheet 14 and the top coat 12. The layer of neutral barrier material 16 acts to adhere the top coat 12 to the latex-treated backing coat 14 while completely separating the two to permit the curing of the top coat 12 without interference from the backing sheet 14. It is important therefore that the barrier material also prevent migration of materials from the backing sheet to the top coat of adhesive and vice versa. Optionally, as is shown in FIG. 4, the substrate may include a layer of antislip material 17 formulated on the side of the substrate 10 opposed to the neutral barrier material 16 and the top coat 12. Such an anti-slip surface is particularly useful when the abrasive material is to be used under wet sanding conditions.

Alternatively, as can be seen in FIGS. 5 through 8, the substrate 10 may also include a layer of primer 15

which is disposed between the latex treated backing sheet 14 and the layer of neutral barrier material 16. The layer of primer 15 is applied to the top surface of the backing sheet 14 to promote the application and adhesion of the neutral barrier material 16 to the backing sheet 14.

The top coat 12 of abrasive grit adhesive includes an adhesive resin 18 and an abrasive grit material 20, with the combination being used to abrade surfaces which are brought into contact with the abrasive material. Possible materials for such an abrasive grit adhesive cover a wide range of curable resins and grit materials as will be readily appreciated by those skilled in the art.

The primary function of the adhesive is to adhere the grit to the underlying substrate or sheet. Generally, the adhesives used to bond the abrasive grit to the substrate are very soft or sticky in the uncured state. The abrasive grit is applied while the resin or resin solution is still very soft and then allowed to cure. The curing or crosslinking reaction converts the adhesive to a non-sticky, rubbery or firm adhesive mass. Usually the crosslinking is brought about through heating, although other types of energy input such as ultraviolet radiation can also be used for special classes of adhesives. The curing takes place concurrently with or after the solvent is evaporated, although adhesives which contain no solvent are also known.

Historically, adhesives which contain carbon-carbon double bonds and which crosslink through free radical reaction with the double bonds have been widely known and used. Such adhesives are called drying oils and oleoresinous varnishes. The oleoresinous varnishes are classified as alkyds or epoxy esters. Alkyds are made from reactions of polyhydric alcohols with acids containing unsaturated carbon-carbon bonds. Epoxy esters are made by reacting the same types of acids with epoxy resins. These varnishes crosslink by a complex free radical mechanism involving oxygen. Usually organometallic compounds containing metals such as manganese, lead or zinc are used to help promote oxidation. For a more detailed discussion of varnishes see reference Printing Ink Manual, F.A. Askew Editor, W. Heffer and Sons Ltd, Cambridge, England, 2nd edition, 1969.

Epoxy resins have also been used in abrasive grit adhesives for some time. A large number of curing agents for epoxy resins are used. Acids or bases will open epoxide rings and initiate polymerization or crosslinking. The type of hardener or curing agent employed depends on the resin hardness desired, time and temperature available for curing, etc. For example, polyamide resins used in relatively large amounts with epoxy resins give a very tough, flexible cured adhesive through incorporation of the polyamide into the polymer chains.

Adhesives containing active hydrogen groups (amides, alcohols, acids, etc.) such as saturated polyesters, many types of latex and derivatives of cellulose are commonly cured with aminoplasts such as urea-formaldehyde or melamine-formaldehyde condensates. These curing reactions are usually accelerated by acids.

Polyurethanes are another broad class of adhesives. These usually are made from polyisocyanates and compounds containing active hydrogen moieties. Curing takes place via reaction of the isocyanate with the groups containing active hydrogen. Water, carboxylic acids and other active hydrogen contaminants will cause side reactions and affect the cure of polyurethanes. Cured polyurethanes can be rubbery, tough or hard depending on the nature of the isocyanate and the active hydrogen compounds.

Phenolic resins are widely used in making abrasive products. These resins cure by condensation of phenol and formaldehyde to a hard, three dimensional network.

The abrasive grit used with the above adhesive resins include such materials as aluminum oxide, garnet and silicon carbide. Obviously many other materials can also be used, with particle size and material hardness being the primary selection factors.

The backing sheet 10 is a latex-treated or saturated base paper. The paper itself can be made from natural or synthetic materials. Examples of natural papers include cellulosic materials such as kraft paper. Synthetic paper can be made from a variety of polymeric materials such as polyethylene, polypropylene, polyester and nylon, as for example, Tyvek® spunbonded polyolefin, Typar® spunbonded polypropylene and Reemay® spunbonded polyester by Dupont, Lutrasil® spunbonded polypropylene and Lutradur® spunbonded polyester by Lutravil Co. and Cerex® spunbonded nylon by James River Corp. Alternatively, the paper may be a blend of cellulosic and synthetic materials, as for example, a cellulosic paper reinforced with polymeric staple fibers.

To form a latex treated backing sheet, an untreated base paper having a basis weight of approximately 52.6 $g/m^2$ (14 lb/1300 $ft^2$) is treated with a latex saturant such as acrylic latexes, nitrile latexes, styrene butadiene rubber (SBR) or nitrile butadiene rubber (NBR). Treatment of the base paper with a latex saturant is usually in the amount of 15 to 100 parts pick-up which is defined as the parts of solid saturant per 100 parts of paper. Thus, for example, a paper having a basis weight of 52.6 $g/m^2$(14 lb/1300 $ft^2$) and 100 parts pick-up of latex would have a post-treatment basis weight of 105.2 $g/m^2$ (28 lb/1300 $ft^2$). The selection of these materials and their formation into a latex saturated base material are known in the art. See for example, J.F. Waterhouse, "Paper Reinforcement by Polymer Addition," in Pulp and Paper: Chemistry and Chemical Technology, J.P. Casey editor, Vol. IV, 3rd edition, Wiley-Interscience, N.Y., 1983, pp. 2399-2427.

Also note that the above recitation of base papers, basis weights, latexes and methods of preparation are illustrative only.

The negative aspect of using latex treated backing sheets is that they contain compounds and/or chemical functional groups which interfere with the acid, base and oxygen driven curing systems of many abrasive grit adhesive resins. If an adhesive resin with an acid-containing curing system is brought into contact with a base-containing latex formulation, the base will neutralize the acid or acidic qualities of the curing system thereby partially or in some cases completely inhibiting the resin's ability to cure properly. The same inhibition also takes place when a basic curing resin attempts to cure in the presence of an acid-containing latex formulation.

Most latex-treated backing sheets also contain antioxidants. Without the antioxidants the latex will quickly oxidize and either turn to a sticky film or become brittle, neither of which is desired. These same antioxidants can migrate to or be found on the surface of the backing sheet and it is here that they interfere with the oxidation and thus the curing of the air drying varnishes or resins such as alkyds and epoxy esters. Examples of antioxidants include hindered amine compounds and hindered phenol compounds. For further examples of and discussions on antioxidants, see P.P. Nicholas, A.M. Luxeder, L.A. Brooks, and P.A. Hammes, "Antioxidants and Antiozonants", in Kirk-Othmer Encyclopedia of Chemical Technology, 3rd edition, Vol. 3, Wiley-Interscience, New York, 1978, pp. 128-148 and "Antioxidants", R.O. Babbitt, The Vanderbilt Rubber Handbook, R.T. Vanderbilt Co., Inc., Norwalk, CT, 1978, pp. 344-346.

Other latexes contain surfactants, such as soaps, which may contain acid or base functional groups. Soaps and other surfactants tend to collect on the surface of the latex-treated backing sheet where they may interfere with both adhesion and curing of the resin. Additional additives which may be present in latex saturated backing sheets include silica, clay, dyes, and sizing agents, any or all of which may or may not have a deleterious effect upon the ability of the abrasive grit adhesive to cure or adhere properly.

In forming such latex-treated backing sheets, the latex saturant is typically applied in a size press and then allowed to dry. Such forming processes are well known. See for example, U.S. Patent No, 3,026,241 to Hechtman et al, mentioned already above. Once the latex saturated backing material has been formed, it may be optionally corona-treated, that is, the surface is exposed to electrical corona discharge. The corona treatment is performed on the surface of the backing sheet which will receive the neutral barrier layer. It is hypothesized that this treatment increases the surface free energy of the latex-treated backing sheet and, therefore, enhances the uniform covering of the backing sheet with the layer of neutral barrier material. It is also believed that as a result of the corona treatment, reactive sites are formed on the surface of the latex-treated backing sheet which will promote adhesion of the neutral barrier layer. The amount of corona treatment should be in the range of from about 21.5 to about 161.5 $W/m^2/min$. (2 to about 15 $watts/ft^2/min$) with the preferred range being from 21.5 to 53.8 $W/m^2/min$. (2 to 5 $watts/ft^2/min$.) Further discussion of the use of corona treatment may be had by reference to : J.F. Carley and P.T. Kitze, "Corona-Discharge Treatment of Polyethylene Films, I : Experimental Work and Physical Effects," Polymer and Engineering Science, 18(4), pp 326-334 (1978) ; J.F. Carley and P.T. Kitze, "Corona Discharge Treatment of Polymeric Films, II : Chemical Studies", Polymer and Engineering Science, 20(5), pp. 330-338 (1980) ; and J.A. Coffman and W.R. Browne, "Corona Chemistry", Scientific American, 212(6), pp. 90 + (1965).

Alternatively, the latex saturated backing sheet may be first treated with a primer and then subjected to the above corona treatment. A primer is a highly functional material designed to place polar or chemically reactive groups on the backing sheet surface to augment those already present. The use of a primer is advantageous in that it improves the compatibility and adhesion of the latex backing sheet with the neutral barrier coat. Examples of such primers include poly(vinylidene chloride), urethane and ethylene-acrylic acid copolymer. Urethane primers are available from Morton-Thiokol, Inc. as Adcote® 503H, Adcote® 76FS93 and Lamal® 408-40. Poly(vinylidene chloride) primer is available from Morton-Thiokol, Inc. as Serfene® 2015 and ethylene-acrylic acid copolymer primer is available from Dow Chemical USA as Primacor® 4990. A preferred primer, especially due to its low cost and efficiency, is polyethyleneimine, examples of which are Mica® D-222-3 and A-131-X from the Mica Corp., Corcat® P-600 from Cordova Chemical Co. of Michigan and Adcote® 1544-H from Morton-Thiokol, Inc.

For the primer to work well, it should be applied to the backing sheet at law coat weights of approximately 0.0015 to 0.94 $g/m^2$ (0.0004 to 0.25 $lb/1300\ ft^2$) and preferably at 0.015 to 0.094 $g/m^2$ (0.004 to 0.025 $lb/1300\ ft^2$). Application of the primer can be by any acceptable method such as, for example, by the use of a blade coater, a rod coater or a gravure coater. Further discussion of the use of primers may be had by reference to R.H. Cramm, "Extrusion Coating", in Pulp and Paper : Chemistry and Chemical Technology, J.P. Casey editor, Vol. IV, 3rd edition, Wiley-Interscience, N.Y., 1983, pp. 2501-2532.

As outlined above, the layer of neutral barrier material is used to separate the top coat of abrasive grit adhesive resin from the curing inhibitive materials found in the latex-saturated backing material or any other coating layers which would otherwise come in contact with the top coat and interfere with its curing. Overall, the neutral barrier coat must have a number of properties if it is to function in the intended manner. A primary attribute of the barrier material is that it does not contain any substances which would interfere with the curing process of

the resinous top coat. Thus, if the barrier material is to work with acid, base or oxygen curing systems, the barrier material itself cannot contain any acid inhibitors, i.e. basic materials, base inhibitors, i.e. acidic materials, or antioxidants.

The barrier coat to be effective must be flexible to accommodate bending of the abrasive sheet material during use. Once applied, the barrier material must completely coat the surface of the latex backing to prevent contact of and transfer of components between the backing and the top coat. Thus, it is preferred that the layer of neutral barrier material have a Gurley air resistance in excess of 1000 sec/100 cc of air as defined by TAPPI Official Standard T-460 OS-75 for "Air Resistance of Paper". To achieve this relative lack of permeability, the barrier layer must be present in a thickness of at least 0.008 mm (0.0003 inches) which equates to about 7.5 $g/m^2$ (2 lb/1300 $ft^2$) below this thickness interruptions in the barrier coat tend to occur which may allow the inhibitive materials to contact the top coat and possibly interfere with the curing process.

Formation of the barrier layer on the latex-treated backing sheet can be by any process compatible with both the backing sheet and the materials which will comprise the barrier layer. One method of application is a hot melt coating process. A preferred method of application is the extrusion coating process wherein a hot molten film of the barrier coating material is brought into contact with the latex-treated backing sheet and the combination is then placed under pressure through the use of nip rollers. Further information on extrusion coating may be had by referring to the previously cited article by R.H. Cramm on "Extrusion Coating".

Coextrusion is another method of forming a neutral barrier layer. R.H. Cramm also teaches, in his previously cited article, about coextrusion techniques. Via coextrusion, a multilayered coating having component sublayers is prepared at a singe coating station by combining the polymer flows from two or more extruders. Resin blending does not occur. Instead, distinct component sublayers are formed which are in intimate contact with one another. By using this technique, it is possible to incorporate a component sublayer of non-neutral resin into the barrier coating so long as the non-neutral resin is completely isolated from the top of the barrier coating. The non-neutral resin of the component sublayer must not contribute interfering additives which can migrate to the top of the barrier coating and prevent the curing of the acid-inhibited, base-inhibited, or oxidative curing abrasive grit adhesive top coat. For example, it may be desirous to include by coextrusion a sublayer of ethylene-acrylic acid copolymer or ionomer resin to improve the adhesion of the barrier coating to the latex treated backing sheet. Because each of these resins contains acidic functionality, it would be necessary to design the overall barrier coating so that the topmost layer would provide a neutral surface to permit the acid-inhibited, base-inhibited, and oxidative curing abrasive grit adhesives to cure. In addition, the overall design of the coextruded barrier coating must prevent contact of and transfer of components between the latex-treated backing sheet and the abrasive grit adhesive top coat.

Once the barrier layer has been joined to the latex-treated backing sheet, the laminate may be optionally subjected to a heat treating process to further ensure contact between the two layers. Preferably the heat treating process is carried out in a temperature range of from 90°C to 150°C. At the high end of the temperature range, the length of treatment may be as little as 15 seconds, while at the low end of the temperature range the heat treatment may be carried out for as long as 15 minutes. The length of treatment is also dependent upon the composition of the barrier layer.

In addition to the heat treatment of the laminated substrate, the surface of the neutral barrier layer may optionally be subjected to a corona treatment to increase surface free energy and promote the wetting out of the top coat of abrasive grit adhesive resin onto the surface of the barrier layer. For treatment of the neutral barrier layer, it is preferred that the corona treatment be applied at about 43.1 $W/m^2/min.$ (4 $watts/ft^2/min.$) so that the neutral barrier layer has a wetting tension of 0.04-0.05 N/m (40-50 dynes/cm) using ASTM Standard D 2578-67 (Reapproved 1979) "Wetting Tension of Polyethylene and Polypropylene Films".

Materials which, through the below described testing, were found to act as a neutral barrier layer included low density polyethylene, linear low density polyethylene, ethylene-vinyl acetate (EVA) copolymer and ethylene methyl acrylate (EMA) copolymer resins. All of these resins can be characterized as being able to adhere well to latex-saturated backing materials and abrasive-grit adhesive resins which include acid-inhibited, base-inhibited or oxidative curing systems. Equally as important, these barrier materials are neutral since they do not contain any acidic or basic functional groups, antioxidants, surfactants or other additives which would impair the top coat's ability to cure properly. Furthermore, these materials are barriers in that they act to prohibit the migration of any interfering agents from the backing sheet to the surface of the barrier layer where they could inhibit the curing process of the abrasive grit adhesive. Finally, all of the resins are flexible, have densities ranging from 0.910-0.950 $gm/cm^3$ and a Gurley air resistance in excess of 1000 sec/100 cc of air when applied in layers having a thickness greater than or equal to 0.01 mm (0.0004 inches).

All of the exemplary neutral barrier materials mentioned above are readily available from a number of sources. Examples of low density polyethylenes include Norchem® PE-1013 and PE-1014 from Norchem Co., Dow® PE-722, PE-4005 and PE-4012 from Dow Chemical USA and Alathon® 1540, 1570 and 1645 from Dupont. Linear low density polyethylene is available from Dow Chemical USA as Dowlex® 3010. Ethylene-vinyl acetate (EVA) copolymers include Elvax® PE-3046-3, 3180, 3185 and 3152 from Dupont, Melthene® 5001 and Norchem® 1010, 3050, EVA 3060, EVA 3070 and EVA 3080 from Norchem Co. Ethylene-methyl acrylate (EMA) copolymer resin is available from Chevron as PE-2205, PE-2207 and PE-2255. Obviously, blends of these and other compatible resins would also come within the scope of this invention.

Finally, as an optional embodiment, the substrate 10 may be provided with a layer of anti-slip material 17 on the side of the substrate opposite the layer of abrasive grit adhesive 12. The layer of anti-slip material is applied as a coating which typically contains a latex binder with mildly abrasive filler particles such as silica. This layer may be applied at any stage in the formation of the abrasive material, the only caveat being that the application not interfere with the curing or affect the performance of the top coat of abrasive grit adhesive. Accordingly, the following examples illustrate various embodiments of the invention :

## EXAMPLES

Samples were prepared using various substrate combinations of latex-treated backing sheets and barrier layers. The sample substrates were then tested with several adhesive top coats including those which were acid-inhibited, base-inhibited and air drying. In addition, certain samples were treated with primer, corona and/or heat in an attempt to influence the quality of the product. In all, a total of 19 samples were tested. The results from the testing of these samples is contained in Tables I through V below.

Table I is a summary of the substrates used in conjunction with acid-sensitive resins, base-sensitive resins and air drying (oxidative) resins. Two latex treated backing sheets were prepared for testing, backing sheet #1 and backing sheet #2. Backing sheet #1 and backing sheet #2 both used the same base paper which was a lightly refined kraft paper having no additives. The basis weight of the kraft paper was 526 g/m$^2$ (14 lb/1300 ft$^2$), caliper was 140 μm (55 mils) and the Gurley air resistance was approximately 6 sec/100 cc of air for 8 sheets of paper.

The saturants used to form the latex-treated backings were applied using a commercial flooded nip roller size press. Such equipment is available from a number of sources including The Black Clawson Company and The Beloit Company. The saturant for backing sheet #1 was a nitrile-butadiene rubber (NBR) latex with approximately 33 percent acrylonitrile by weight. In addition, the NBR latex was formulated with 8

SUBSTRATE COMPOSITIONS TABLE I

| SAMPLE NUMBER | BACKING SHEET NUMBER | BARRIER COAT RESIN* | BARRIER COAT THICKNESS** µm (mils) | PRIMER | PRE CORONA ( $W/FT^2/MIN$ ) $W/m^2/min.$ | HEAT TREATMENT | POST-CORONA $W/FT^2/MIN$ |
|---|---|---|---|---|---|---|---|
| 1 | 1 | Primacor® 3440 Ethylene-Acrylic Acid Copolymer | 11.4 (0.45) | PEI | 43.1 (4) | - | - |
| 2 | 1 | Dow® PE-722 Low density Polyethylene | 14.0 (0.55) | PEI | 43.1 (4) | - | - |
| 3 | 1 | Dowlex® 3010 Linear Low Density Polyethylene | 14.0 (0.55) | PEI | 43.1 (4) | - | - |
| 4 | 1 | Surlyn® 1702 Ionomer | 12.7 (0.50) | PEI | 32.3 (3) | - | - |
| 5 | 1 | Nucrel® 0910 Ethylene-Methacrylic Acid Copolymer | 12.7 (0.50) | PEI | 32.3 (3) | - | - |
| 6 | 1 | Alathon® 1540 Low Density Polyethylene | 12.7 (0.50) | PEI | 32.3 (3) | - | - |
| 7 | 1 | Melthene® 5001 Ethylene-vinyl Acetate Copolymer | 15.2 (0.60) | None | 32.3 (3) | - | - |

TABLE I (Cont'd)

| SAMPLE NUMBER | BACKING SHEET NUMBER | BARRIER COAT RESIN* | BARRIER COAT THICKNESS** µm (mils) | PRIMER | PRE CORONA ( $W/FT^2/MIN$ ) $W/m^2/min.$ | HEAT TREATMENT | POST-CORONA ( $W/FT^2/MIN$ ) $W/m^2/min.$ |
|---|---|---|---|---|---|---|---|
| 8 | 1 | Dow® PE-722 Low Density Polyethylene | 14.0 (0.55) | PEI | 43.1 (4) | - | 43.1 (4) |
| 9 | 1 | Norchem® 1014 Low Density Polyethylene | 15.2 (0.60) | PEI | None | - | 43.1 (4) |
| 10 | 1 | Chevron® PE-2207 Ethylene-Methyl Acrylate Copolymer | 12.7 (0.50) | PEI | None | 105°C/ 30 sec. | 43.1 (4) |
| 11 | 1 | Norchem® 3050 Ethylene-Vinyl Acetate Copolymer | 12.7 (0.50) | None | None | 105°C/ 30 sec. | 43.1 (4) |
| 12 | 1 | Dowlex® 3010 Linear Low Density Polyethylene | 14.0 (0.55) | PEI | 43.1 (4) | - | 43.1 (4) |
| 13 | 1 | Alathon® 1540 Low Density Polyethylene | 12.7 (0.50) | PEI | 32.3 (3) | - | 43.1 (4) |
| 14 | 1 | Melthene® 5001 Ethylene-Vinyl Acetate Copolymer | 15.2 (0.60) | None | 32.3 (3) | - | 43.1 (4) |

TABLE I (Cont'd)

| SAMPLE NUMBER | BACKING SHEET NUMBER | BARRIER COAT RESIN | BARRIER COAT THICKNESS** (2.5-5 lb/1300 $ft^2$) 9.4-18.8 $g/m^2$ | PRIMER | PRE CORONA ( $W/FT^2/MIN$ ) $W/m^2/min.$ | HEAT TREATMENT | POST-CORONA ( $W/FT^2/MIN$ ) $W/m^2/min.$ |
|---|---|---|---|---|---|---|---|
| 15 | 1 | NBR-PVC blend latex fatty acid soap system | - | None | - | 105°C/ 3 min | - |
| 16 | 1 | NBR-PVC blend latex sulfonate soap system | - | None | - | 105°C/ 3 min | - |
| 17 | 2 | Ethylene-vinyl chloride copolymer latex; carboxylated | - | None | - | 105°C/ 3 min | - |
| 18 | 2 | Ethylene-vinyl chloride copolymer latex; amide functionality | - | None | - | 105°C/ 3 min | - |
| 19 | 2 | Primacor® 4983 Ethylene-acrylic acid copolymer dispersion | - | None | - | 105°C/ 3 min | - |

* Samples 1-14 were prepared by extrusion coating while samples 15-19 were prepared from latex or water dispersions and applied with a Meyer rod. Samples 15-19 had no primer nor any pre-or post-corona treatment.

** The barrier coat thickness of samples 1-14 was calculated by weighing a free film of resin obtained during sample preparation and then calculating the thickness of the film from the resin density. The barrier coats of samples 15-19 were applied at a coating weight of 9.4-18.8 $g/m^2$ (2.5-5 lb/1300 $ft^2$).

parts of brown pigment per 100 parts dry latex, 5 parts of fatty acid soap per 100 dry parts of latex and 4 parts of water soluble phenolic resin per 100 dry parts of latex. The saturant pick-up was 30 parts of dry saturant per 100 parts of paper. The NBR latex was chosen because it provided the mechanical properties and durability needed for abrasive sheet substrates. It was also chosen because it contained a fatty acid soap (a basic surfactant material) which would interfere with an acid-cured resin. Furthermore, the NBR latex, as purchased, contained several antioxidants, all of which would interfere with air drying (oxidative) resins. After treatment with the latex, backing sheet #1 had a Gurley air resistance of 12 sec/100 cc of air for 8 sheets of paper.

Backing sheet #2 used the same base paper as backing sheet #1. The saturant was the same as that used in #1 except for the fact that it contained an additional 30 dry parts of clay per 100 dry parts of latex. Here the saturant pick-up was 38 parts of dry saturant per 100 parts of paper. This saturant was chosen because it contained clay which is slightly acidic and which would, therefore, interfere with base cured resins. After treatment with the latex, backing sheet #2 had a Gurley air resistance of 15 sec/100 cc of air for 8 sheets of paper. As mentioned above, both latex treated backing sheets contained antioxidants to prevent their subsequent deterioration.

A total of fifteen barrier coatings were used in preparing the laminates. The barrier coatings of samples 1-14 were applied by extrusion coating onto the latex-treated backing sheets while the barrier coatings of samples 15-19 were applied to the latex-treated backing sheets with a Meyer rod. The latex backing sheets of samples 1-8 and 12-14 were corona treated with 32.3-43.1 $W/m^2/min.$ (3-4 $watts/ft^2/min.$) prior to the application of the respective barrier coats while the latex-treated backing sheets of samples 1-6, 8-10, 12 and 13 were first primed with polyethyleneimine (coating weight of 0.056 $g/m^2$ (0.015 $lb/1300\ ft^2$)) and then corona treated with 32.3-43.1 $W/m^2/min.$ (3-4 $watts/ft^2/min.$). All barrier coatings were applied at coating weights of from 9.4 to 18.8 $g/m^2$ (2.5 to 5 $lb/1300\ ft^2$) which equated to a minimum barrier coat thickness of at least 10. 2 μm (0.4 mils) or 0.01 mm (0.0004 inches). Applications of the barrier coats in samples 8 through 14 were followed by a corona treatment of 43.1 $W/m^2/min.$ (4 $watts/ft^2/min.$) to adjust the wetting tension of the barrier surface to about 0.04-0.05 N/m (40 to 50 dynes/cm). Samples 10 and 11 were also heat treated at 105°C for 30 seconds after the barrier coats had been applied and before corona treatment to adjust the wetting tension of the barrier surface.

Once the backing sheet/barrier coat composites were formed, they were then tested in conjunction with abrasive grit adhesive resins which were acid-sensitive, base-sensitive or antioxidant-sensitive (i.e., an air-drying varnish). The acid-sensitive adhesive resin contained an isocyanate compound and a base catalyst which is sensitive to acidic functions. The isocyanate reacted with the base catalyst to form an isocyanurate resin upon curing. The base-sensitive resin had an acid catalyst (such as a melamine-formaldehyde resin and an acid) which is destroyed by bases. The antioxidant-sensitive resin was a typical air-drying varnish which is dependent upon oxygen for crosslinking and thus for curing. Such air drying varnishes include epoxidized linseed oil with metal driers such as manganese and zinc compounds which are widely known and utilized in the making of abrasive grit paper. In addition, all adhesives resins were dissolved in a xylene solvent to a solids content of approximately 30 percent. For testing purposes the adhesive resins were applied to the substrates without any abrasive grit. This was because the grit itself is inert and therefore nonreactive with the other materials of the abrasive sheet. The acid and base sensitive resins were cured at 130°C for two minutes while the air drying (antioxidant sensitive) resin was cured at 100°C for six hours.

After the samples were cured, they were air cooled and then immediately checked for tackiness using a subjective finger touch test to determine the degree and quality of the curing. The results are listed in Table II. Abrasive grit adhesive coatings which were tacky were given a "poor" rating. Such a rating indicated that the resin did not cure properly due to the interference of an inhibitive material present in or on the barrier coat. This in turn meant that the particular barrier coating a) was not neutral, b) contained additives which were not neutral, or c) was not a barrier to the migration of interfering agents from the latex-treated backing sheet to the top surface of the barrier layer. Therefore, such a barrier coating material would not fall within scope of the invention because it was incompatible with at least one of the three types of abrasive grit adhesive resins. Those abrasive grit adhesive resins which were not tacky to the touch were given a "good" rating. If a particular barrier coating achieved a "good" rating with all three adhesive resin systems, then it qualified as a neutral barrier coating.

With respect to the curing results of Table II, those barrier coatings which gave "good" results with all three types of abrasive grit adhesives resins had four properties which collectively defined the coating material as being a neutral barrier. First, the coating material itself was neutral in

TABLE II

CURING TEST RESULTS FOR BARRIER COATED LATEX SUBSTRATES

| Sample Number | Acid Sensitive Resin | Base Sensitive Resin | Air Drying Varnish |
|---|---|---|---|
| 1 | poor | good | |
| 2 | good | good | |
| 3 | good | good | |
| 4 | poor | good | |
| 5 | poor | good | |
| 6 | good | good | |
| 7 | good | good | |
| 8 | good | good | good |
| 9 | good | good | good |

TABLE II (Cont'd)

| Sample Number | Acid Sensitive Resin | Base Sensitive Resin | Air Drying Varnish |
|---|---|---|---|
| 10 | good | good | good |
| 11 | good | good | good |
| 12 | good | good | good |
| 13 | good | good | good |
| 14 | good | good | good |
| 15 | good | poor | |
| 16 | poor | good | |
| 17 | poor | good | |
| 18 | poor | poor | |
| 19 | poor | good | |

the sense that it contains no acid or base functional groups in the polymer molecules which would interfere with the adhesive resin top coat. Second, the coating material did not contain any antioxidants which would interfere with the curing of the adhesive resin top coat. Third, the coating material did not contain any surfactants or other additives which themselves would have acid or base functional groups which would interfere with the adhesion or curing of the adhesive top coat. Fourth, the coating material acted as a barrier to prevent the migration of similar interfering agents from the backing sheet to the surface of the barrier coat where they could come into contact with the adhesive top coat.

Those barrier coatings which contained acidic or basic functional groups within the resins themselves, such as ethylene-acrylic acid resin, or in the surfactant system, such as the NBR-PVC blends, failed with one or both of the acid or base sensitive adhesives. As a result, such barrier coatings were not neutral or universal in the sense that they could not be used to form a barrier coated latex-treated substrate which would be compatible with all three types of abrasive grit adhesive resins. The unfit resin systems included the resins from samples 1, 4, 5, 15, 16, 17, 18 and 19.

The coating materials that did act as neutral barriers were those materials which were neutral, i.e. contained no acid or base functional groups, and contained no antioxidants, surfactants or other additives which could possibly migrate to the surface and destroy the inertness of the barrier coat. They were also the materials which acted as barriers, thereby preventing the migration of any interfering substances from the backing sheet to the interface of the neutral barrier coat and abrasive grit adhesive top coat. Additionally, the inertness of those barriers was not affected by subsequent heat and/or corona treatment prior to the application of the top coat of abrasive grit adhesive resin. The barrier coatings of Table II which had these properties were samples 2, 3 and 6 through 14 and included ; the polyethylenes, the ethylene-vinyl acetate resins and the ethylene-methyl acrylate resins, all of which were devoid of additives, surfactants or migrating agents which would inhibit the resin curing systems. Thus they possessed the necessary properties mentioned above to qualify as a neutral barrier material.

In addition to providing an inert or neutral surface for receiving the abrasive grit adhesive resin, the barrier coated substrate must allow for good coating of the adhesive resin/solvent solutions. The barrier coated substrate also must be water resistant for wet sanding applications and for maintaining good adhesion of the adhesive top coat after prolonged soaking in water. Consequently, these properties were tested with those samples in Table II which proved to be neutral. The results are set forth in Tables III, IV and V.

Table III indicates the results from testing to determine how easily the various types of abrasive grit adhesive resins would spread out and cover selected neutral barrier coated samples. In addition to the three types of adhesive resins used in Table II, an epoxy resin with a polyamide type of curing resin (Versamid® from the Henkel Corp.) and a phenolic resin were also tested. Both resins were applied in the same manner as the other resins to the indicated substrates and then cured at 100°C for six hours. Although these types of adhesive resins are not particularly sensitive to acids, bases or antioxidants, they are themselves widely used in the industry as abrasive grit adhesives. Therefore, a truly

TABLE III

COATING RECEPTANCE OF NEUTRAL BARRIER COATED SAMPLES

| Sample # | Acid Sensitive Resin | Base Sensitive Resin | Epoxy-Ester Varnish | Epoxy-Versamid® Adhesive | Phenolic Resin |
|---|---|---|---|---|---|
| 2 | good | poor | good | good | good |
| 3 | good | poor | good | good | good |
| 6 | good | poor | good | good | good |
| 7 | good | poor | good | poor | good |
| 8 | good | marginal | good | good | good |
| 9 | good | good | good | poor | good |
| 10 | good | good | good | poor | good |
| 11 | good | good | good | good | good |
| 12 | good | marginal | good | good | good |
| 13 | good | marginal | good | good | good |
| 14 | good | poor | good | good | good |

neutral barrier coated, latex-treated substrate should provide good cure and adhesion to these types of top coats as well.

The spreading or coating ability was rated by visual inspection in Table III. A "good" rating meant that the particular neutral barrier coating allowed the indicated abrasive grit adhesive resin to go on as a smooth, uniform film. A "marginal" rating meant that the spreading of the resin onto the barrier coat resulted in small localized areas wherein the barrier surface was devoid of resin. A "poor" rating meant that there were large areas of the barrier coat surface which were devoid of adhesive. As can be seen in Table III, the "good" rating clearly predominated in the 55 applications. A comparison of samples 2 with 13 and 3 with 12 also demonstrates that the use of corona treatment will improve the coatability of the base sensitive resin onto the neutral barrier coat.

The results of the testing for adhesion and water sensitivity of the neutral barrier coated latex substrates are shown in Tables IV and V. Each of the cured samples was soaked in water for 24 hours. Testing involved crumpling the samples and then inspecting them for signs of milkiness, stickiness or flaking of the top coat of adhesive resin. Flaking of the top coat was an indication that there was insufficient adhesion between the top coat and the barrier coat. Little or no flaking was given a rating of "good" while moderate to excessive flaking resulted in the respective ratings of "marginal" and "poor". The results are shown in Table IV.

With respect to Table V, a milky appearance or sticky touch of the water soaked samples indicated that there was poor water resistance of the samples because of swelling, of the coating

TABLE IV

ADHESION TESTS OF NEUTRAL BARRIER COATED SAMPLES AFTER SOAKING IN WATER FOR 24 HRS.

| Sample # | Acid Sensitive Resin | Base Sensitive Resin | Epoxy-Ester Varnish | Epoxy-Versamid® Adhesive | Phenolic Resin |
|---|---|---|---|---|---|
| 2 | good | fair | good | good | marginal |
| 3 | good | poor | good | fair | good |
| 6 | good | poor | good | fair | good |
| 7 | good | poor | good | good | poor |
| 8 | good | fair | | good | |
| 9 | good | good | | good | |
| 10 | good | good | good | good | good |
| 11 | good | good | good | good | good |
| 12 | good | good | | good | |
| 13 | good | poor | | good | |
| 14 | good | poor | | good | |

TABLE V

WATER SENSITIVITY OF NEUTRAL BARRIER COATED SAMPLES

| Sample # | Acid Sensitive Resin | Base Sensitive Resin | Epoxy-Ester Varnish | Epoxy-Versamid® Adhesive | Phenolic Resin |
|---|---|---|---|---|---|
| 2 | fair | good | good | good | good |
| 3 | fair | good | good | fair | good |
| 6 | good | good | good | good | good |
| 7 | fair | good | good | | |
| 9 | good | good | good | good | good |
| 10 | good | good | good | good | good |
| 11 | good | good | good | good | good |
| 12 | good | good | good | good | good |
| 13 | good | good | good | good | good |
| 14 | fair | good | good | good | good |

by water and softening which lead to a change in feel and appearance. Samples which had little or no indication of being milky or sticky were given a "good" rating while samples which moderately or clearly exhibited these properties were given a "fair" or "poor" rating respectively.

From the results shown in Tables IV and V it is evident that there were no instances of poor water resistance or sensitivity with any of the neutral barrier coats. Furthermore, poor wet adhesion was only evident in a few instances where there was no corona treatment. All of the corona treated barrier coated substrates achieve a "good" rating with respect to water sensitivity. Thus it is evident that the neutral barrier coats also supplied the necessary adhesion between the top coat and the backing subsequent to their having fulfilled the function of providing a neutral barrier layer.

As the above data indicates, latex treated backing sheets having the above-defined layer of neutral barrier material are compatible with abrasive grit adhesive resins which are inhibited by acid or base functional groups, anti-oxidants, surfactants and other additives. Moreover, neutral barrier materials according to the present invention should not be limited to those materials specifically set forth above. To the contrary, the present invention is meant to encompass all materials which are both neutral and act as barriers to the migration of substances which could come into contact with the top coat and prevent or inhibit its curing. Consequently such resins as, for example, polypropylene, medium density polyethylene, linear medium density polyethylene, high density polyethylene, polyethylene terephthalate, acrylic and polyurethane are also contemplated as neutral barrier materials for the present invention.

By employing a barrier coated substrate, as taught by the present invention, it is possible to circumvent much of the engineering and the trial and error efforts previously needed to ensure that specific and commonly used latex-treated backing sheets were compatible with adhesive resins having acid, base or oxygen dependent curing systems.

## Claims

1. A substrate (10) for supporting an abrasive grit (20) adhesive top coat (18) having a curing system selected from the group consisting of acid-inhibited, base-inhibited and oxidative curing systems, said substrate comprising :

a latex-treated backing sheet (14), and

a layer (16) of neutral barrier material disposed on top of said backing sheet (14), said neutral barrier material being adapted for adhering said top coat (18) to said backing sheet (14) while separating said backing sheet (14) and top coat (18) to permit the curing of said top coat (18) without interference from said backing sheet (14) and said neutral barrier material (16).

2. The substrate of Claim 1 wherein said neutral barrier material is selected from the group consisting of low density polyethylene, linear low density polyethylene, ethylene-vinyl acetate copolymer and ethylene methyl acrylate copolymer.

3. The substrate of Claim 1 or 2 wherein said backing sheet (14) is treated with a primer (15) having a coating weight of about 0.015 g/m$^2$ (0.004 lb/1300 ft$^2$) to about 0.94 g/m$^2$ (0.25 lb/1300 ft$^2$).

4. The substrate of Claim 3 wherein said primer is selected from the group consisting of urethane, poly(vinylidene chloride), ethylene-acrylic acid copolymer and polyethyleneimine.

5. The substrate of Claim 3 wherein said primer is polyethyleneimine.

6. The substrate of one of the preceding Claims wherein said backing sheet is corona treated.

7. The substrate of one of the preceding Claims wherein said layer (16) of neutral barrier material is corona treated to promote the wetting and adhesion of said top coat to said layer of neutral barrier material.

8. The substrate of one of the preceding Claims which further includes a layer (17) of anti-slip material on a surface of said latex-treated backing sheet (14) opposed to said layer (16) of neutral barrier material.

9. The substrate of claim 1 or 2 which substrate is a laminate.

10. A method of forming a substrate for supporting an abrasive grit adhesive top coat having a curing system selected from the group consisting of acid-inhibited, base-inhibited and oxidative curing systems, said method comprising the steps of :

a) coating a latex-treated backing sheet with a layer of neutral barrier material to protect and separate said abrasive grit adhesive from said latex-treated backing sheet ; and

b) subjecting said coated backing sheet to a corona treatment to promote the wetting and adhesion of said abrasive grit adhesive to said neutral barrier material.

11. The method of Claim 10 wherein said neutral barrier material is selected from the group consisting of low density polyethylene, linear low density polyethylene, ethylene-vinyl acetate copolymer and ethylene methyl acrylate copolymer.

12. The method of Claim 10 or 11 which further includes the step of subjecting said latex-treated backing sheet to an initial corona treatment prior to said coating step.

13. The method of Claim 10 or 11 which further includes the steps of priming said latex-treated backing sheet with a primer having a coating weight of about 0.015 g/m² (0.004 lb/1300 ft²) to about 0.94 g/m² (0.25 lb/1300 ft²).

14. The method of Claim 13 wherein said primer is selected from the group consisting of urethane, poly(vinylidene chloride), ethylene-acrylic acid copolymer and polyethyleneimine.

15. The method of Claim 13 wherein said primer is polyethyleneimine.

16. The method of one of Claims 13 to 15 which further includes the step of subjecting said latex-treated backing sheet to an initial corona treatment prior to said coating step.

17. The method of Claim 10 or 11 which further includes the step of heat treating said latex-treated backing sheet after said coating step and before said corona treatment of said coated backing sheet.

18. The method of one of Claims 10 to 17 which further includes the step of applying a layer of anti-slip material to a surface of said latex-treated backing sheet opposed to said layer of neutral barrier material.

19. Use of the substrate of one of the claims 1 to 9 together with a top coat layer of abrasive grit and adhesive, said adhesive having a curing system selected from the group consisting of acid-inhibited base-inhibited and oxidative curing systems, as an abrasive material.

20. Use according to claim 19 as wet or dry sandpaper.

## Ansprüche

1. Substrat (10) zum Tragen eines Haftdecküberzugs (18) mit Schleifkorn (20) und einem Härtsystem ausgewählt aus der Gruppe bestehend aus säure-inhibierten, basen-inhibierten und oxidativen Härtsystemen, wobei das Substrat

eine latexbehandelte Unterlagsschicht (14) und

eine Schicht (16) aus neutralem, auf der Oberseite der Unterlagsschicht (14) angeordnetem Barrierematerial umfaßt, wobei das neutrale Barrierematerial dazu geeignet ist, den Decküberzug (18) an die Unterlagsschicht (14) zu haften, und gleichzeitig die Unterlagsschicht (14) von dem Decküberzug (18) zu trennen, um ein Härten des Decküberzugs (18) ohne Beeinflussung durch die Unterlagsschicht (14) und das neutrale Barrierematerial (16) zu erlauben.

2. Substrat nach Anspruch 1, wobei das neutrale Barrierematerial aus der Gruppe bestehend aus Polyethylen niedriger Dichte, linearem Polyethylen niedriger Dichte, einem Ethylen-Vinylacetat-Copolymer und einem Ethylen-Methylacrylat-Copolymer ausgewählt ist.

3. Substrat nach Anspruch 1 oder 2, wobei die Unterlagsschicht (14) mit einer Grundierung (15) behandelt ist, die ein Auflagegewicht von etwa 0,015 g/m² (0,004 lb/1300 ft²) bis etwa 0,94 g/m² (0,25 lb/1300 ft²) aufweist.

4. Substrat nach Anspruch 3, wobei die Grundierung aus der Gruppe bestehend aus Urethan, Poly(vinylidenchlorid), einem Ethylen-Acrylsäure-Copolymer und Polyethylenimin ausgewählt ist.

5. Substrat nach Anspruch 3, worin die Grundierung Polyethylenimin ist.

6. Substrat nach einem der vorhergehenden Ansprüche, wobei die Unterlagsschicht einer Koronabehandlung unterzogen ist.

7. Substrat nach einem der vorhergehenden Ansprüche, wobei die Schicht (16) aus neutralem Barrierematerial einer Koronabehandlung unterzogen ist, um das Benetzen und Haften des Decküberzugs an der Schicht aus neutralem Barrierematerial zu unterstützen.

8. Substrat nach einem der vorhergehenden Ansprüche, das weiterhin eine Schicht (17) aus Antigleitmaterial auf einer Oberfläche der latexbehandelten Unterlagsschicht (14) gegenüberliegend der Schicht (16) aus neutralem Barrierematerial aufweist.

9. Substrat nach Anspruch 1 oder 2, wobei das Substrat ein Laminat ist.

10. Verfahren zur Herstellung eines Substrats zum Tragen eines Schleifkornhaftdecküberzugs mit einem Härtsystem ausgewählt aus der Gruppe bestehend aus säure-inhibierten, basen-inhibierten und oxidativen Härtsystemen, wobei das Verfahren die folgenden Schritte umfaßt:

a) das Überziehen einer latexbehandelten Unterlagsschicht mit einer Schicht aus einem neutralen Barrierematerial, um das Schleifkornhaftmittel vor der latexbehandelten Unterlagsschicht zu schützen und diese voneinander zu trennen, und

b) das Unterwerfen der beschichteten Unterlagsschicht einer Koronabehandlung, um das Benetzen und Haften des Schleifkornhaftmittels an dem neutralen Barrierematerial zu unterstützen.

11. Verfahren nach Anspruch 10, wobei das neutrale Barrierematerial aus der Gruppe bestehend aus Polyethylen niedriger Dichte, linearem Polyethylen niedriger Dichte, einem Ethylen-Vinylacetat-Copolymer und einem Ethylen-Methylacrylat-Copolymer ausgewählt ist.

12. Verfahren nach Anspruch 10 oder 11, in welchem als weiterer Schritt die latexbehandelte Unterlagsschicht vor dem Beschichtungsschritt zunächst einer Koronabehandlung unterworfen wird.

13. Verfahren nach Anspruch 10 oder 11, das als weiteren Schritt das Grundieren der latexbehandelten Unterlagsschicht mit einer Grundierung mit einem Auflagegewicht von etwa 0,015 g/m$^2$ (0,004 lb/1300 ft$^2$) bis etwa 0,94 g/m$^2$ (0,25 lb/1300 ft$^2$) umfaßt.

14. Verfahren nach Anspruch 13, wobei die Grundierung aus der Gruppe bestehend aus Urethan, Poly(vinylidenchlorid), einem Ethylen-Acrylsäure-Copolymer und Polyethylenimin ausgewählt ist.

15. Verfahren nach Anspruch 13, wobei die Grundierung Polyethylenimin ist.

16. Verfahren nach einem der Ansprüche 13 bis 15, in welchem als weiterer Schritt die latexbehandelte Unterlagsschicht vor dem Beschichtungsschritt zunächst einer Koronabehandlung unterworfen wird.

17. Verfahren nach Anspruch 10 oder 11, in welchem als weiterer Schritt die latexbehandelte Unterlagsschicht nach dem Beschichtungsschritt und vor der Koronabehandlung der beschichteten Unterlagsschicht einer Wärmebehandlung unterzogen wird.

18. Verfahren nach einem der Ansprüche 10 bis 17, in welchem als weiterer Schritt eine Schicht aus Antigleitmaterial auf einer Oberfläche der latexbehandelten Unterlagsschicht gegenüberliegend der Schicht aus neutralem Barrierematerial aufgebracht wird.

19. Verwendung des Substrats nach einem der Ansprüche 1 bis 9 zusammen mit einer Decküberzugsschicht aus Schleifkorn und Haftmittel als Schleifmittel, wobei das Haftmittel ein Härtsystem ausgewählt aus der Gruppe bestehend aus säure-inhibierten, basen-inhibierten und oxidativen Härtsystemen enthält.

20. Verwendung nach Anspruch 19 als feuchtes oder trockenes Sandpapier.

**Revendications**

1. Substrat (10) adapté à supporter un recouvrement adhésif (18) présentant des grains abrasifs (20), ledit recouvrement ayant un système de durcissement choisi dans le groupe comprenant les systèmes de durcissement inhibés aux acides, inhibés aux bases, et oxydatifs, ledit substrat étant constitué :

d'une feuille de doublage (14) traitée au latex, et

d'une couche (16) d'un matériau formant barrière neutre disposée sur le dessus de ladite feuille de doublage (14), ledit matériau formant barrière neutre étant adapté à faire adhérer ledit recouvrement (18) sur ladite feuille de doublage (14) tout en séparant ladite feuille de doublage (14) dudit recouvrement (18) pour permettre le durcissement du recouvrement (18), sans que ladite feuille de doublage (14) et ledit matériau formant barrière neutre (16) interfèrent.

2. Substrat selon la revendication 1, dans lequel ledit matériau formant barrière neutre est choisi dans le groupe comprenant le polyéthylène basse densité, le polyéthylène basse densité linéaire, le copolymère éthylène-acétate de vinyle et le copolymère éthylène-acrylate de méthyle.

3. Substrat selon la revendication 1 ou 2, dans lequel ladite feuille de doublage (14) est traitée avec un apprêt (15) ayant un poids de revêtement d'environ 0,015 g/m$^2$ à environ 0,94 g/m$^2$.

4. Substrat selon la revendication 3, dans lequel ledit apprêt est choisi dans le groupe comprenant l'uréthane, le poly(chlorure de vinylidène), le copolymère éthylène-acide acrylique et la polyéthylèneimine.

5. Substrat selon la revendication 3, dans lequel ledit apprêt est la polyéthylèneimine.

6. Substrat selon l'une quelconque des revendications précédentes, dans lequel ladite feuille de doublage (14) est traitée par décharge couronne.

7. Substrat selon l'une quelconque des revendications précédentes, dans lequel ladite couche (16) de matériau formant barrière neutre est traitée par décharge couronne pour promouvoir la mouillabilité et l'adhérence dudit recouvrement à ladite couche de matériau formant barrière neutre.

8. Substrat selon l'une quelconque des revendications précédentes, qui comprend en outre une couche (17) de matériau anti-glissement sur une surface de ladite feuille de doublage (14) traitée au latex opposée à ladite couche (16) de matériau formant barrière neutre.

9. Substrat selon la revendication 1 ou 2 qui est un stratifié.

10. Procédé de formation d'un substrat pour supporter un recouvrement adhésif comprenant des grains abrasifs, ledit recouvrement ayant un système de durcissement choisi dans le groupe comprenant les systèmes de durcissement inhibés par les acides, inhibés par les bases et oxydatifs, ledit procédé comprenant les étapes de :

a) revêtement d'une feuille de doublage traitée au latex avec une couche de matériau formant barrière neutre pour protéger et séparer l'adhésif contenant des grains abrasifs de la feuille de doublage traitée au latex, et de

b) soumission de ladite feuille de doublage revêtue à un traitement par décharge couronne pour promouvoir la mouillabilité et l'adhésion de l'adhésif renfermant des grains abrasifs audit matériau formant barrière neutre.

11. Procédé selon la revendication 10, dans lequel ledit matériau formant barrière neutre est choisi dans le groupe comprenant le polyéthylène basse densité, le polyéthylène basse densité linéaire, le copolymère éthylène acétate de vinyle et le copolymère éthylène acrylate de méthyle.

12. Procédé selon la revendication 10 ou 11, qui comprend en outre l'étape de soumission de ladite feuille de doublage traitée au latex à un traitement par décharge couronne initial avant ladite étape de revêtement.

13. Procédé selon la revendication 10 ou 11, qui consiste en outre à apprêter ladite feuille de doublage (14) traitée au latex avec un apprêt ayant un poids de revêtement d'environ 0,015 g/m$^2$ à environ 0,94 g/m$^2$.

14. Procédé selon la revendication 13, dans lequel ledit apprêt est choisi dans le groupe comprenant l'uréthane, le poly(chlorure de vinylidène), le copolymère éthylène-acide acrylique et la polyéthylèneimine.

15. Procédé selon la revendication 13, dans lequel ledit apprêt est la polyéthylèneimine.

16. Procédé selon l'une quelconque des revendications 13 à 15, qui consiste en outre à soumettre ladite feuille de doublage traitée au latex à un traitement par décharge couronne initial avant ladite étape de revêtement.

17. Procédé selon la revendication 10 ou 11, qui consiste en outre à traiter thermiquement ladite feuille de doublage traitée au latex après ladite étape de revêtement et avant ledit traitement par décharge couronne de ladite feuille de doublage revêtue.

18. Procédé selon l'une des revendications 10 à 17, qui consiste en outre à appliquer une couche de matériau anti-glissement sur une surface de ladite feuille de doublage (14) traitée au latex à l'opposé de ladite couche de matériau formant barrière neutre.

19. Utilisation comme matériau abrasif du substrat selon l'une des revendications 1 à 9, avec une couche de recouvrement de grains abrasifs et d'adhésif, ledit adhésif ayant un système de durcissement choisi dans le groupe comprenant les systèmes de durcissement inhibés aux acides, inhibés aux bases et oxydatifs.

20. Utilisation selon la revendication 19 sous la forme de papier de verre humide ou sec.

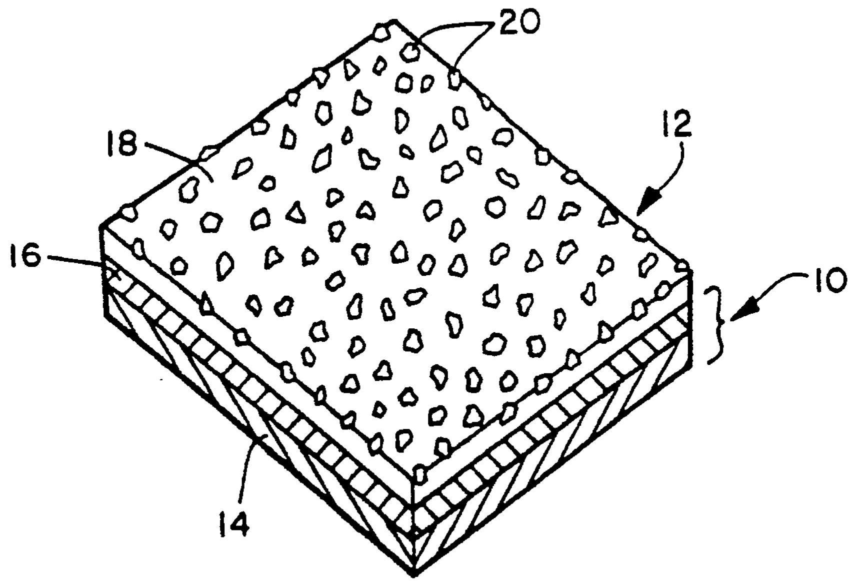


FIG. 1

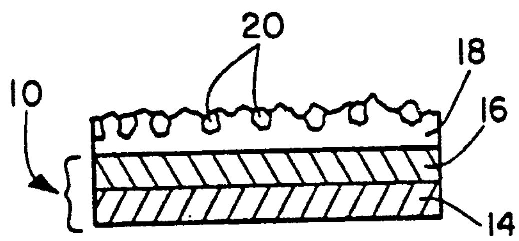


FIG. 2

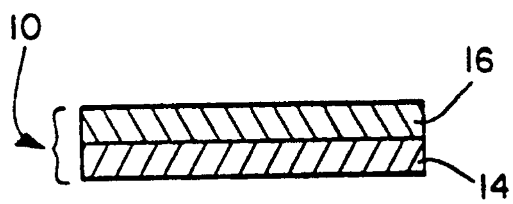


FIG. 3

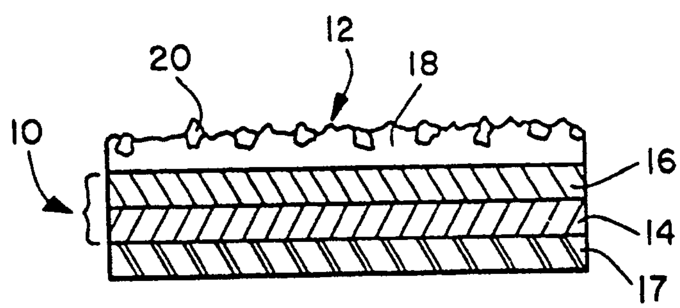


FIG. 4

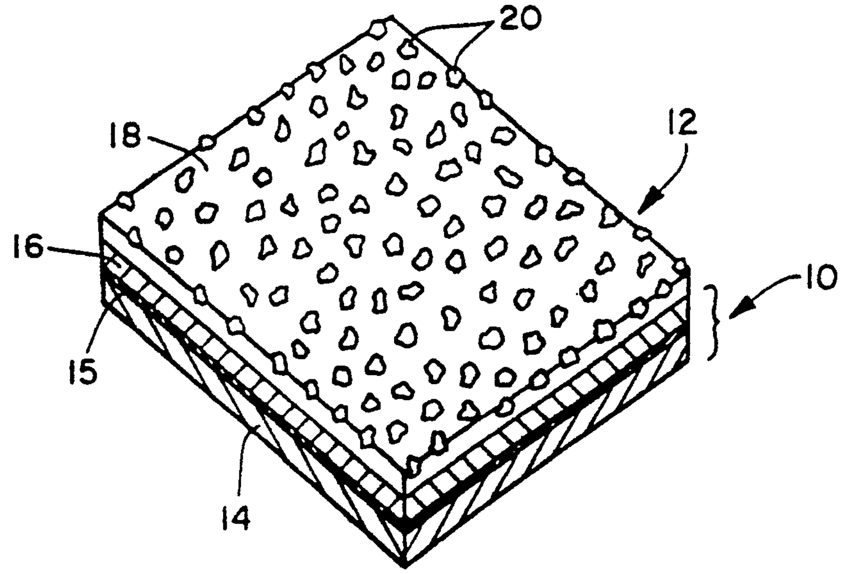


FIG. 5

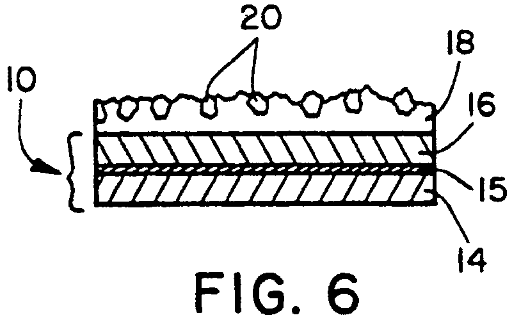


FIG. 6

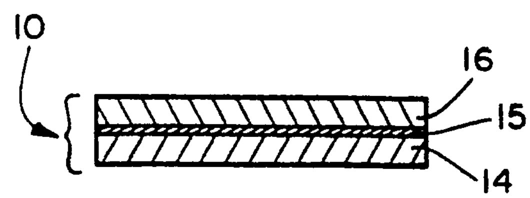


FIG. 7

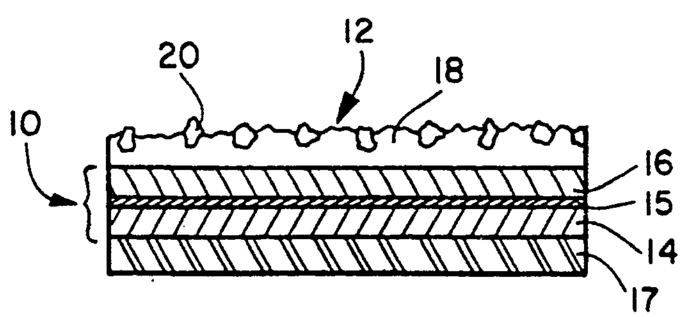


FIG. 8